# EUROPÄISCHE PATENTSCHRIFT

(11) **EP 0 743 823 B1**
(45) Veröffentlichungstag und Bekanntmachung des Hinweises auf die Patenterteilung: **16.04.1997**
(21) Anmeldenummer: 95915128.3
(22) Anmeldetag: 28.03.1995
(51) Int. Cl.: A23B 4/06, A23B 4/09

(54) **VERFAHREN UND VORRICHTUNG ZUM TIEFKÜHLEN VON KEGELFÖRMIGEN HACKFLEISCHERZEUGNISSEN, INSBESONDERE VON DÖNERKEBAPFLEISCHKEGELN**
PROCESS AND DEVICE FOR DEEP-FREEZING CONICAL MINCED MEAT PRODUCTS, ESPECIALLY DONER KEBAB CONES
PROCEDE ET DISPOSITIF PERMETTANT DE CONGELER DES BLOCS DE VIANDE HACHEE CONIQUES, NOTAMMENT DES CONES DE DONER KEBAB

(30) Priorität: 29.04.1994 DE 9407438 U
(43) Veröffentlichungstag der Anmeldung: 27.11.1996
(73) Patentinhaber: Aydemir, Irfan, 13585 Berlin (DE)
(72) Erfinder: Aydemir, Irfan, 13585 Berlin (DE)
(74) Vertreter: Felke, Hans-Jürgen
(86) Internationale Anmeldenummer: DE9500456
(87) Internationale Veröffentlichungsnummer: WO9529594

(56) Entgegenhaltungen:
- DE-A- 3 714 446
- DE-U- 9 407 438
- FR-A- 2 262 914
- GB-A- 720 670
- NL-A- 277 367
- NL-A- 8 301 309
- US-A- 2 261 808
- US-A- 2 672 032
- US-A- 4 294 865
- US-A- 4 968 520

## Beschreibung

Die Erfindung betrifft ein Verfahren und eine Vorrichtung zum Tiefkühlen von kegelförmigen Hackfleischerzeugnissen, insbesondere von Dönerkebapfleischkegeln, wobei die Vorrichtung aus einer wärmeisolierten Gefrierkammer mit einem Bodenteil, vier Wandteilen, einem aufklappbaren Deckel sowie einer Kältemittelzuflußleitung und einer Kältemittelabflußleitung besteht.

Verfahren und Vorrichtungen zum Tiefkühlen von Fleisch sind allgemein bekannt. Dabei werden die Fleischstücke in direkten oder indirekten Kontakt mit dem Kältemittel gebracht.

Gemäß der Richtlinie des Rates der Europäischen Gemeinschaften Nr. 88/657/EWG vom 14. Dezember 1988 müssen Fleisch und Fleischzubereitungen, die in tiefgekühlter Form vermarktet werden sollen, spätestens nach vier Stunden eine Kerntemperatur von weniger als -18° C erreicht haben.
Angesichts des Volumens von Dönerkebapfleischkegeln ist ein Tiefkühlen mittels der bekannten Verfahren und Vorrichtungen einerseits sehr teuer und andererseits sind die vorgenannten Vorgaben des Rates der EG nicht realisierbar.

Der Erfindung liegt die Aufgabe zugrunde, ein gattungsgemäßes Verfahren und eine Vorrichtung zum Tiefkühlen von kegelförmigen Hackfleischerzeugnissen, insbesondere von Dönerkebapfleischkegeln zu schaffen, die ein kostengünstiges Tiefkühlen unter Einhaltung der Kriterien der EG-Richtlinie Nr. 88/657/EWG gewährleistet.

Erfindungsgemäß wird diese Aufgabe durch die im Kennzeichen der Ansprüche 1, 2 und 4 genannten Merkmale gelöst.
Eine zweckmäßige Ausgestaltung der Erfindung ist im Anspruch 4 genannt.

Die mit der Erfindung erzielten Vorteile bestehen darin, daß durch die Einführung eines mit der Kältemittelzuflußleitung verbundenes Edelstahlrohr durch die Längsachse des kegelförmigen Hackfleischerzeugnisses, durch die Verwendung einer Kältemittelberieselungseinrichtung und durch das Eintauchen in die zur Hälfte mit Kältemittel gefüllten Gefrierkammer das Hackfleischerzeugnis gleichzeitig von innen und außen tiefgekühlt wird. Dadurch wird ein kostengünstiges Tiefkühlen unter Einhaltung der von der EG gesetzten Vorgaben ermöglicht.

Die Erfindung soll nachstehend an einem Ausführungsbeispiel näher erläutert werden. In der dazugehörigen Zeichnung zeigen:
- Fig. 1: eine Vorderansicht der erfindungsgemäßen Vorrichtung im Schnitt;
- Fig. 2: den Schnitt A-A nach Fig. 1;
- Fig. 3: zwei übereinander angeordnete fahrbare Beschickungsgestelle.

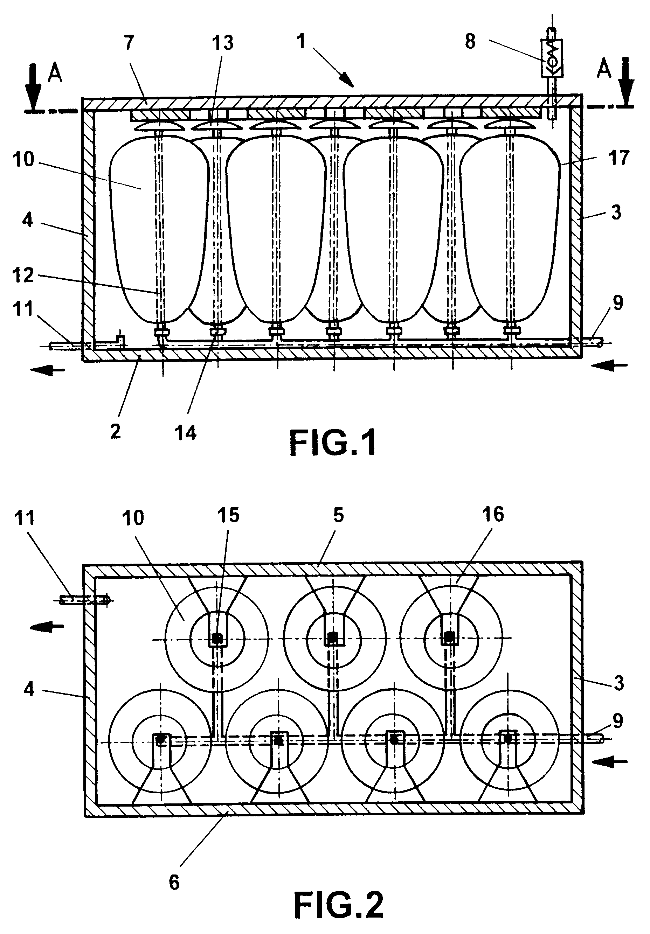

Wie aus Fig. 1 und 2 ersichtlich ist, besteht die erfindungsgemäße Vorrichtung zum Tiefkühlen von kegelförmigen Hackfleischerzeugnissen, insbesondere von Dönerkebapfleischkegeln aus einer wärmeisolierten Gefrierkammer 1 mit einem Bodenteil 2, zwei Querwänden 3 und 4, zwei Längswänden 5 und 6 sowie einem aufklappbaren Deckel 7, der mit einem beheizten Druckausgleichsventil 8 und einer Deckelrahmenheizung versehen ist. Im unteren Teil der Querwand 3 ist eine Kältemittelzuflußleitung 9 hindurchgeführt, die sich entlang des Bodenteils 2 erstreckt und mit Abzweigungen und Kupplungen 14 zu jedem senkrecht stehenden kegelförmigen Hackfleischerzeugnis 10 versehen ist.
Im unteren Teil der Querwand 4 ist eine Kältemittelabflußleitung 11 hindurchgeführt. Die Kältemittelzuflußleitung 9 und die Kältemittelabflußleitung 11 sind in bekannter Weise über eine Einrichtung zum Umwälzen des Kältemittels und mit einer Kaskadenkühleinrichtung verbunden, in der das Kältemittel auf eine Zuflußtemperatur von -30 bis -70° C abgekühlt wird.

Bei der Zubereitung von Dönerkebap befindet sich auf der Längsachse des Fleischkegels ein Rohr aus Pappe mit einem Durchmesser von ca. 22 mm.
In Vorbereitung der Tiefkühlung wird anstelle dieses Papprohres ein Edelstahlrohr 12 in das Hackfleischerzeugnis 10 eingebracht. Weiterhin ist am oberen Ende des Edelstahlrohres 12 eine schirmförmige Kältemittelberieselungseinrichtung 13, auf deren Schirm ein Zapfen 15 ausgebildet ist, angeordnet.
Oberhalb der Kältemittelberieselungseinrichtung 13 ist an der Längswand 5 bzw. 6 der Gefrierkammer 1 jeweils ein Lagerbock 16 angeordnet, der in seinem vorderen Teil ein Langloch zur Aufnahme des Zapfens 15 sowie ein klappbares Kreissegmentteil aufweist.

Die Tiefkühlung der kegelförmigen Hackfleischerzeugnisse 10 erfolgt auf folgende Weise:

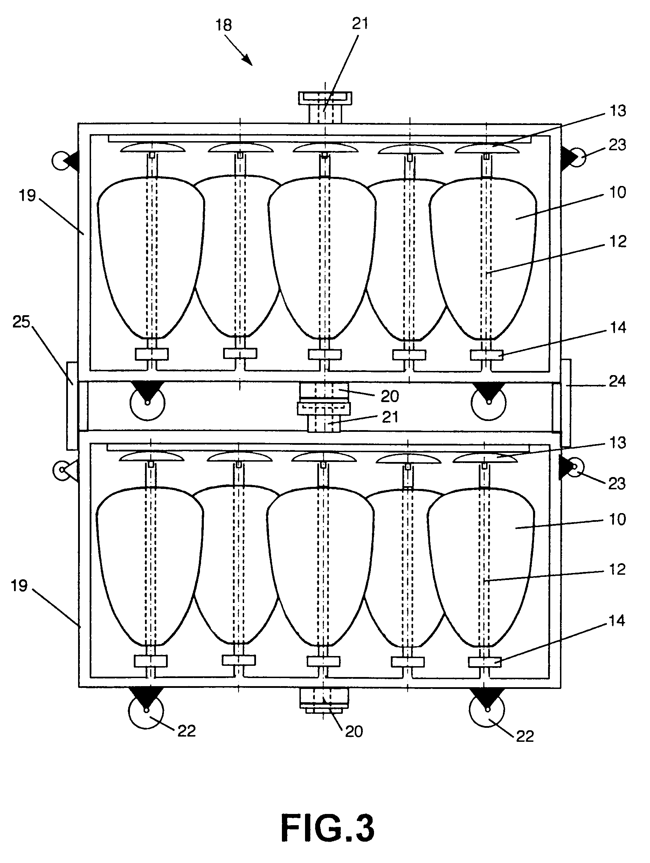

Der Deckel 7 der Gefrierkammer 1 wird geöffnet und die mit dem Edelstahlrohr 12 und der Kältemittelberieselungseinrichtung 13 versehenen Hackfleischerzeugnisse 10 werden einzeln in die Gefrierkammer 1 eingesetzt, die etwa bis zur Hälfte mit einem Kältemittel gefüllt ist.
Als Kältemittel können die in der Kältetechnik allgemein eingesetzten flüssigen Kältemittel, vorzugsweise aber flüssiges Ethanol oder Stickstoff verwendet werden.
Beim Einsetzen der so vorbereiteten Hackfleischerzeugnisse 10 in die Gefrierkammer 1 greift das untere Teil des Edelstahlrohres 12 in die Kupplung 14 ein und der obere Teil des Edelstahlrohres 12 wird im Langloch des Lagerbockes 16 positioniert.
Das klappbare Kreissegmentsteil am vorderen Teil des Lagerbockes 16 wird über einen Verschluß geschlossen, wodurch sich eine Bohrung ergibt, die dem Durchmesser des Zapfens 15 entspricht. Auf diese Weise wird das Hackfleischerzeugnis 10 gegen ein Kippen aus der senkrechten Lage gesichert.
Das vorher beschriebene einzelne Einsetzen der Hackfleischerzeugnisse 10 in die Gefrierkammer 1 ist sicher nur dann zweckmäßig, wenn eine relativ geringe Anzahl von kegelförmigen Hackfleischerzeugnissen 10 auf einmal tiefgekühlt werden soll.
Um die nachteiligen Folgen eines längeren Öffnens des Deckels 7 zu vermeiden, werden insbesondere bei der Tiefkühlung größerer Stückzahlen von Hackfleischerzeugnissen 10 die in Fig. 3 dargestellten fahrbaren Beschickungsgestelle 18 eingesetzt.
Diese Beschickungsgestelle 18 bestehen aus einer Rohrrahmenkonstruktion 19 mit einem durchgängig verbundenen Innenquerschnitt. Innerhalb eines Beschickungsgestelles 18 sind mehrere Reihen von Hackfleischerzeugnissen 10 in der dargelegten Weise angeordnet. An der Unter- und Oberseite eines solchen Beschickungsgestelles 18 ist die Rohrrahmenkonstruktion 19 mit je einer Zentralkupplung 20 und 21 versehen.
Die Unterseite des Beschickungsgestelles 18 weist weiterhin zwei Radpaare 22 und die Stirnseiten zwei gegenüberliegende Abstandshalter 23 auf.
Die Beschickungsgestelle 18 sind übereinander stapelbar ausgebildet, wobei zwei jeweils an den Stirnseiten befestigte Halterungen 24 und 25 eine ausreichende Positionierung gewährleisten.

Die mit Hackfleischerzeugnissen 10 gefüllten Beschickungsgestelle 18 werden mittels Hebetechnik in die Gefrierkammer 1 eingesetzt. Dabei greift die Zentralkupplung 20 des ersten Beschickungsgestelles 18 in die Kupplung 14 der Kältemittelzuflußleitung 9 ein, so daß die gesamte Rohrrahmenkostruktion 19 mit Kältemittel durchflossen werden kann.
Die Abstandshalter 23 stützen sich an den Querwänden 3 und 4 der Gefrierkammer 1 ab und sichern damit ein genaues Positionieren des zuerst eingebrachten Beschickungsgestelles 18.
Wird nun auf das erste Beschickungsgestell 18 ein weiteres Beschickungsgestell 18 aufgesetzt, so greift dessen untere Zentralkupplung 20 in die obere Zentralkupplung 21 des ersten Beschickungsgestelles 18 ein, so daß auch die Rohrrahmenkonstruktion 19 des zweiten Beschickungsgestelles 18 von Kältemittel durchflossen werden kann.
Je nach Größe der Gefrierkammer 1 können nicht nur mehrere Beschickungsgestelle 18 übereinander sondern auch hintereinander in die Gefrierkammer 1 eingesetzt werden.
Nach dem Beschicken der Gefrierkammer 1 wird nun der Deckel 7 geschlossen und die Kältemittelzuflußleitung 9 geöffnet. Das Kältemittel gelangt von der Kältemittelzuflußleitung 9 über das Edelstahlrohr 12 zur Kältemittelberieselungseinrichtung 13, von der der nicht im Kältemittel eingetauchte obere Teil des Hackfleischerzeugnisses 10 berieselt wird.
Nach einer Ausführungsvariante des Verfahrens wird nach dem Beschicken der Gefrierkammer 1 mit Hackfleischerzeugnissen 10 und dem Schließen des Deckels 7 oder einer in der vorderen Längswand 6 ausgebildeten Tür auf die Außenflächen der Hackfleischerzeugnisse 10 und über die oberhalb der Hackfleischerzeugnisse 10 angeordneten Kältemittelzuflußleitung 9 mittels einer Düse in das Edelstahlrohr 12 flüssiges Ethanol aufgespritzt bzw. eingespritzt. Bei dieser Variante entfällt die Kältemittelberieselungseinrichtung 13.
Sowohl beim Berieseln oder Aufspritzen als auch beim Eintauchen des Hackfleischerzeugnisses 10 in das in der Gefrierkammer 1 befindliche Kältemittelniveau bildet sich sofort eine Eisschicht, so daß das Kältemittel im weiteren Verlauf des Tiefkühlprozesses nicht mehr direkt mit dem Hackfleischerzeugnis 10 in Kontakt steht.

Um eine gesundheitliche oder qualitative Beeinträchtigung des Hackfleischerzeugnisses 10 durch einen Direktkontakt mit dem Kältemittel zu vermeiden, was bei der Verwendung von preiswerten Kältemitteln nicht ausgeschlossen werden kann, wird um das Hackfleischerzeugnis 10 vor seinem Einbringen in die Gefrierkammer 1 eine schlauchförmige, gefrierbeständige Kunststofffolie 17 angeordnet, die am oberen und unteren Ende des Edelstahlrohres 12 mittels einer spannbaren Manschette gegen Kältemitteleintritt abgedichtet wird.

Nach Beendigung der Tiefkühlung wird die Kältemittelzuflußleitung 9 wieder geschlossen, der Deckel 7 geöffnet, bei einzeln eingesetzten Hackfleischerzeugnissen 10 der Verschluß am klappbaren Kreissegment gelöst und das tiefgekühlte Hackfleischerzeugnis 10 aus der Gefrierkammer 1 entnommen.
Bei der Verwendung von Beschickungsgestellen 18 werden diese nach dem Öffnen des Deckels 7 mittels Hebetechnik aus der Gefrierkammer 1 gehoben und die tiefgekühlten Hackfleischerzeugnisse 10 in vorbeschriebener Weise aus den Beschickungsgestellen 18 entnommen.

Das Edelstahlrohr 12 wird dann kurzzeitig mittels Heißdampf oder einem Heizstab erwärmt, aus dem Hackfleischerzeugnis 10 herausgezogen und das Rohr aus Pappe eingebracht.

Beim Öffnen des Deckels 7 der Gefrierkammer 1 gelangt das verwendete Kältemittel mit der Außenluft, die mit Feuchtigkeit angereichert ist, in Kontakt. Dieses hat zur Folge, daß sich im Kältemittel Eiskristalle bilden könen, die den Kältemitteldurchfluß beeinträchtigen.
Um dieses zu vermeiden, ist außerhalb der Gefrierkammer 1 in der Kältemittelabflußleitung 11 ein Filter zum Auffangen der Eiskristalle angeordnet, der in der Zeichnung nicht dargestellt ist.

Es hat sich als zweckmäßig erwiesen, zur Vermeidung oder mindestens Verringerung der Eiskristallbildung vor dem Öffnen des Deckels 7 in den oberhalb des Kältemittelniveaus befindlichen Freiraum der Gefrierkammer 1 gasförmigen Stickstoff einzublasen. Da der Stickstoff schwerer als Luft ist, wird hierdurch eine Schutzschicht über dem Kältemittelniveau erzeugt.

## Patentansprüche

1. Verfahren zum Tiefkühlen von kegelförmigen Hackfleischerzeugnissen, insbesondere von Dönerkebapfleischkegeln,
**gekennzeichnet dadurch,** daß in die Längsachse des zu kühlenden kegelförmigen Hackfleischerzeugnisses ein Edelstahlrohr eingebracht wird, das Hackfleischerzeugnis so in eine Gefrierkammer eingesetzt wird, daß es etwa zur Hälfte in ein Kältemittel eintaucht und das Hackfleischerzeugnis danach gleichzeitig von innen und außen innerhalb von spätestens vier Stunden mit einer Kerntemperatur von mindestens -18°C derart tiefgekühlt wird, daß das Kältemittel durch das eingebrachte Edelstahlrohr geleitet und der nicht in das Kältemittel eingetauchte Teil des Hackfleischerzeugnisses mit Kältemittel berieselt wird sowie daß vor der Entnahme der tiefgekühlten Hackfleischerzeugnisse in den oberhalb des Kältemittelniveaus befindlichen Freiraum der Gefrierkammer gasförmiger Stickstoff eingeblasen wird.

2. Verfahren zum Tiefkühlen von kegelförmigen Hackfleischerzeugnissen, insbesondere von Dönerkebapfleischkegeln,
**gekennzeichnet dadurch,** daß in die Längsachse des zu kühlenden kegelförmigen Hackfleischerzeugnisses ein Edelstahlrohr eingebracht wird, das Hackfleischerzeugnis in eine Gefrierkammer eingesetzt und danach gleichzeitig von innen und außen innerhalb von spätestens vier Stunden mit einer Kerntemperatur von mindestens -18°C derart tiefgekühlt wird, daß auf die Außenfläche des Hackfleischerzeugnisses und von oben in das Edelstahlrohr mittels einer Düse flüssiges Ethanol aufgespritzt bzw. eingespritzt wird sowie daß vor der Entnahme der tiefgekühlten Hackfleischerzeugnisse in den oberhalb des Kältemittelniveaus befindlichen Freiraum der Gefrierkammer gasförmiger Stickstoff eingeblasen wird.

3. Verfahren nach Anspruch 1, **dadurch gekennzeichnet,** daß als Kältemittel vorzugsweise flüssiges Ethanol oder Stickstoff verwendet wird.

4. Vorrichtung zum Tiefkühlen von kegelförmigen Hackfleischerzeugnissen, insbesondere von Dönerkebapfleischkegeln bestehend aus einer wärmeisolierten Gefrierkammer mit einem Bodenteil, vier Wandteilen, einem aufklappbaren Deckel sowie einer Kältemittelzuflußleitung und einer Kältemittelabflußleitung, **dadurch gekennzeichnet,** daß durch die Längsachse des kegelförmigen Hackfleischerzeugnisses (10) ein Edelstahlrohr (12) hindurchgeführt ist, dessen oberes Ende mit einer schirmförmigen Kältemittelberieselungseinrichtung (13) verbunden ist und dessen unteres Ende über eine Kupplung (14) mit der Kältemittelzuflußleitung (9) in Verbindung steht und daß oberhalb der Kältemittelberieselungseinrichtung (13) ein Zapfen (15) ausgebildet ist, der sich mit einem Langloch in einem oberhalb der Kältemittelberieselungseinrichtung (13) an der Längswand (5,6) der Gefrierkammer (1) angeordneten Lagerbock (16) in Eingriff befindet, wobei das Langloch durch ein klappbares Kreissegmentteil verschließbar ausgebildet ist und daß die Gefrierkammer (1) zu Beginn der Tiefkühlung ca. zur Hälfte mit Kältemittel gefüllt ist sowie daß alternativ um das kegelförmige Hackfleischerzeugnis (10) eine schlauchförmige, gefrierbeständige Kunststoffolie (17) angeordnet ist, die am oberen und unteren Ende des Edelstahlrohres (12) mittels einer spannbaren Manschette gegen Kältemitteleintritt abgedichtet ist sowie gekennzeichnet durch ein Beschickungsgestell (18), bestehend aus einer Rohrrahmenkonstruktion (19) mit einem durchgängig verbundenen Innenquerschnitt auf deren Ober- und Unterseite je eine Zentralkupplung (20 bzw. 21) angeordnet ist sowie deren Unterseite zwei Radpaare (22) aufweist und an deren Stirnseiten zwei gegenüberliegende Abstandshalter (23) und zwei Halterungen (24 und 25) befestigt sind.

## Claims

1. Process for deep-freezing conical minced meat products, particularly of Döner Kebap meat cones,
characterized by the fact that a stainless steel pipe is introduced into the longitudinal axis of the conical minced meat product to be cooled, that the minced meat product is inserted in this state into a freezing chamber, that it is plunged around by a half into a coolant and that the minced meat product after that is deep-frozen from inside and from outside at the same time within a maximum of four hours with a core temperature of at least -18°C in such a way that the coolant is led through the inserted stainless steel pipe and that part of the minced meat product which is not immersed in the coolant is sprinkled with coolant as well as that before taking out the deep-frozen minced meat products gaseous nitrogen is blown into the free space of the cooling chamber situated above the coolant level.

2. Process for deep-freezing conical minced meat products, particularly of Döner Kebap meat cones,
characterized by the fact that a stainless steel pipe is introduced into the longitudinal axis of the conical minced meat product to be cooled, that the minced meat product is inserted into a freezing chamber and after that is deep-frozen from inside and from outside at the same time within a maximum of four hours with a core temperature of at least -18°C in such a way that liquid ethanol is sprayed on the external surface of the minced meat product and from above into the stainless steel pipe by means of a nozzle as well as that before taking out the deep-frozen minced meat products gaseous nitrogen is blown into the free space of the cooling chamber situated above the coolant level.

3. Process according to claim 1,
characterized by the fact that preferably liquid ethanol or nitrogen is used as a coolant.

4. Device for deep-freezing conical minced meat products, particularly of Döner Kebap meat cones, consisting of a thermoinsulated freezing chamber with one bottom part, four wall parts, a lid openable by tilting as well as a coolant feeding line and a coolant draining line,
characterized by the fact that through the longitudinal axis of the conical minced meat product (10) a stainless steel pipe (12) is led, the upper end of which is connected to an umbrella-shaped coolant sprinkling device (13) and the lower end of which is linked by a coupling (14) to the coolant feeding line (14) and that above the coolant sprinkling device (13) a peg (15) is formed which is engaged into a longitudinal hole in a pedestal (16) arranged above the coolant sprinkling device (13) on the longitudinal wall (5, 6) of the freezing chamber (1), the longitudinal hole being formed closeable by a tiltable circle segment part, and that the freezing chamber (1) at the beginning of the deep-freezing is about half-filled with coolant as well as that alternatively a hose-shaped anti-freezing plastic foil (17) is put around the conic minced meat product (10), which foil is sealed against the entrance of cooling at the upper and lower end of the stainless steel pipe (12) by means of a tensionable manifold as well as characterized by a mobile feeding rack (18) consisting of a tube frame construction (19) with an interconnected inner section, on the lower and upper side of which each time a central coupling (20 and 21) is arranged, as well as the lower side of which presents two pairs of wheels (22) and at the front sides of which two facing spacers (23) and two fastenings (24 and 25) are fixed.

## Revendications

1. Procédé pour surgeler des produits de viande hachée coniques, en particulier des cônes de viande de Döner Kebap,
caractérisé par le fait qu'un tuyau d'acier inoxydable est introduit dans l'axe longitudinal du produit de viande haché conique destiné à être refroidi, que le produit de viande hachée est inséré dans cet état dans une chambre de congélation, qu'il est plongé environ à moitié dans un réfrigérant et que le produit de viande hachée ensuite est surgelé à l'intérieur et à l'extérieur en même temps dans un maximum de quatre heures avec une température du noyau d'au moins -18°C de façon que le réfrigérant est conduit à travers le tuyau d'acier inoxydable inséré et la partie du produit de viande hachée laquelle n'est pas immergé dans le réfrigérant est arrosée avec du réfrigérant ainsi qu'avant d'extraire les produits de viande hachée surgelés, de l'azote gazeux est soufflé dans l'espace libre de la chambre de réfrigération situé au-dessus du niveau du réfrigérant.

2. Procédé pour surgeler des produits de viande hachée coniques, en particulier des cônes de viande de Döner Kebap,
caractérisé par le fait qu'un tuyau d'acier inoxydable est introduit dans l'axe longitudinal du produit de viande hachée conique destiné à être refroidi, que le produit de viande hachée est inséré dans une chambre de congélation et ensuite est surgelé à l'intérieur et à l'extérieur en même temps dans un maximum de quatre heures avec une température du noyau d'au moins -18°C de façon que de l'éthanol liquide est vaporisé sur la surface externe du produit de viande hachée et d'en haut dans le tuyau d'acier inoxydable moyennant un jet ainsi qu'avant d'extraire les produits de viande hachée surgelé, de l'azote gazeux est soufflé dans l'espace libre de la chambre de réfrigération situé au-dessus du niveau du réfrigérant.

3. Procédé selon la revendication 1,
caractérisé par le fait que préférablement de l'éthanol liquide ou de l'azote est utilisé comme réfrigérant.

4. Dispositif pour surgeler des produits de viande hachée coniques, en particulier des cônes de viande de Döner Kebap, consistant d'une chambre de surgélation calorifuge avec une partie de fond, quatre parties de paroi, un couvercle ouvrable en basculant ainsi qu'une ligne d'alimentation de réfrigérant et une ligne de drainage de réfrigérant,
caractérisé par le fait qu'à travers l'axe longitudinal du produit de viande haché conique (10), un tuyau d'acier inoxydable (12) est conduit, l'extrémité supérieure duquel est liée à un dispositif d'arrosage de réfrigérant en forme de parapluie (13) et l'extrémité inférieure duquel est liée par un embrayage (14) à la ligne d'alimentation de réfrigérant (14) et qu'au-dessus du dispositif d'arrosage de réfrigérant (13), une cheville (15) est formé laquelle est engagée dans une forure longitudinale dans un piédestal (16) arrangé au-dessus du dispositif d'arrosage de réfrigérant (13) sur la paroi longitudinale (5, 6) de la chambre de congélation (1), la forure longitudinale étant formée à fermeture par une partie de segment de cercle basculable, et que la chambre de congélation (1) au début de la surgélation est remplie environ à moitié avec du réfrigérant ainsi qu'alternativement une feuille plastique anti-congélation en forme de tuyau flexible (17) est mise autour du produit de viande hachée conique (10), laquelle feuille est étanchée contre l'entrée de réfrigérant aux extrémités supérieure et inférieure du tuyau d'acier inoxydable (12) moyennant une manchette tensionable, ainsi que caractérisé par un râtelier d'alimentation mobile (18) consistant d'une construction de châssis de tuyau (19) avec une section intérieure interconnectée, sur le côté inférieur et supérieur de laquelle chaque fois un embrayage central (20 et 21) est arrangé, ainsi que dont le côté inférieur présente deux paires de roues (22) et aux côtés antérieures de laquelle deux pièces d'écartement l'un en face de l'autre (23) et deux fixages (24 et 25) sont fixés.
